**Europäisches Patentamt**

**European Patent Office**

**Office européen des brevets**

(19)

(11) Veröffentlichungsnummer: **0 407 391 B1**

(12) # EUROPÄISCHE PATENTSCHRIFT

(45) Veröffentlichungstag der Patentschrift:
18.09.91 Patentblatt 91/38

(51) Int. Cl.⁵: **B60R 21/00, G01P 15/00**

(21) Anmeldenummer: **89901525.9**

(22) Anmeldetag: **30.01.89**

(86) Internationale Anmeldenummer:
**PCT/DE89/00048**

(87) Internationale Veröffentlichungsnummer:
**WO 89/09146 05.10.89 Gazette 89/24**

(54) ELEKTRONISCHE EINRICHTUNG FÜR DIE SICHERUNG VON FAHRZEUGINSASSEN.

(30) Priorität: **02.04.88 DE 3811217**

(43) Veröffentlichungstag der Anmeldung:
**16.01.91 Patentblatt 91/03**

(45) Bekanntmachung des Hinweises auf die
Patenterteilung:
**18.09.91 Patentblatt 91/38**

(84) Benannte Vertragsstaaten:
**DE FR GB IT SE**

(56) Entgegenhaltungen:
FR-A- 2 271 956
FR-A- 2 366 030
US-A- 4 087 782
US-A- 4 381 829
US-A-44 178 016

(73) Patentinhaber: ROBERT BOSCH GmbH
Postfach 10 60 50
W-7000 Stuttgart 10 (DE)

(72) Erfinder: NITSCHKE, Werner
Rosseger Weg 14
W-7257 Ditzingen 1 (DE)
Erfinder: PFEUFER, Reinhard
Alemannenstra e 5
W-7141 Möglingen (DE)
Erfinder: DROBNY, Wolfgang
Flurweg 5
W-7122 Besigheim (DE)
Erfinder: TAUFER, Peter
Talstra e 45
W-7253 Renningen 2 (DE)

## Beschreibung

### Stand der Technik

Die Erfindung geht aus von einer elektronischen Einrichtung nach der Gattung des Anspruchs 1. Es ist schon eine derartige Einrichtung aus der DE-A-2151399 bekannt, bei der zwei Sensoren in Form piezoelektrischer Kristalle vorgesehen sind und die bei mechanischer Beanspruchung, beispielsweise durch Beaufschlagung mit einer Kraft infolge einer Beschleunigung des Fahrzeugs, eine elektrische Ausgangsspannung liefern. Diese Ausgangsspannung der Sensoren wird über eine Mehrdrahtleitung einem Steuergerät zugeführt und dort verarbeitet. Die bekannte Einrichtung hat den Nachteil, daß im Falle der Verwendung nur weniger Sensoren die Funktionsfähigkeit der gesamten Sicherheitseinrichtung in Frage gestellt ist, sofern ein Sensor funktionsunfähig wird. Andererseits können nicht beliebig viele Sensoren eingesetzt werden, da eine größere Anzahl von Sensoren keineswegs die Zuverlässigkeit der Sicherungseinrichtung steigert sondern lediglich den Aufwand für Verdrahtung und Verbindungsmittel erhöht. Hieraus ergeben sich jedoch über die Lebensdauer des Fahrzeugs gesehen, außerordentlich zahlreiche Fehlerquellen.

Aus US-A-4381829 ist ein Unfallerfassungssystem für Kraftfahrzeuge bekannt, das über mehrere im Inneren des Fahrzeugs verteilt angeordnete Beschleunigungssensoren verfügt. Alle Beschleunigungssensoren sind über einen Multiplexer mit einem Analog/Digitalwandler verbunden, der die analogen Sensorausgangssignale in digitale Signale umformt, bevor sie einem Mikrorechner zugeführt werden. Dieses System hat den Nachteil, daß jeweils nur die Ausgangssignale des von dem Multiplexer ausgewählten Sensors zur Auswertung bereitstehen.

### Vorteile der Erfindung

Die erfindungsgemäße Einrichtung mit den kennzeichnenden Merkmalen des Anspruchs 1 hat demgegenüber den Vorteil, daß neben einer erhöhten Zuverlässigkeit des Gesamtsystems infolge einer vereinfachten Leitungsführung zwischen den Sensoren und dem zugehörigen Steuergerät auch neue Betriebsweisen einer Sicherungseinrichtung ermöglicht werden. Beispielsweise ist es mit der erfindungsgemäßen Einrichtung möglich, auch bei Funktionsumfähigkeit eines oder mehrer Sensoren dennoch die Sicherheit der Fahrzeuginsassen zu gewährleisten, indem nämlich eine zweckentsprechende Neubewertung der Ausgangssignale der noch verbleibenden funktionsfähigen Sensoren vorgenommen wird. Weitere Vorteile der Erfindung ergeben sich aus den Unteransprüchen, in deren Merkmalen vorteilhafte Ausgestaltungen und Weiterbildungen der Erfindung aufgeführt sind.

### Zeichnung

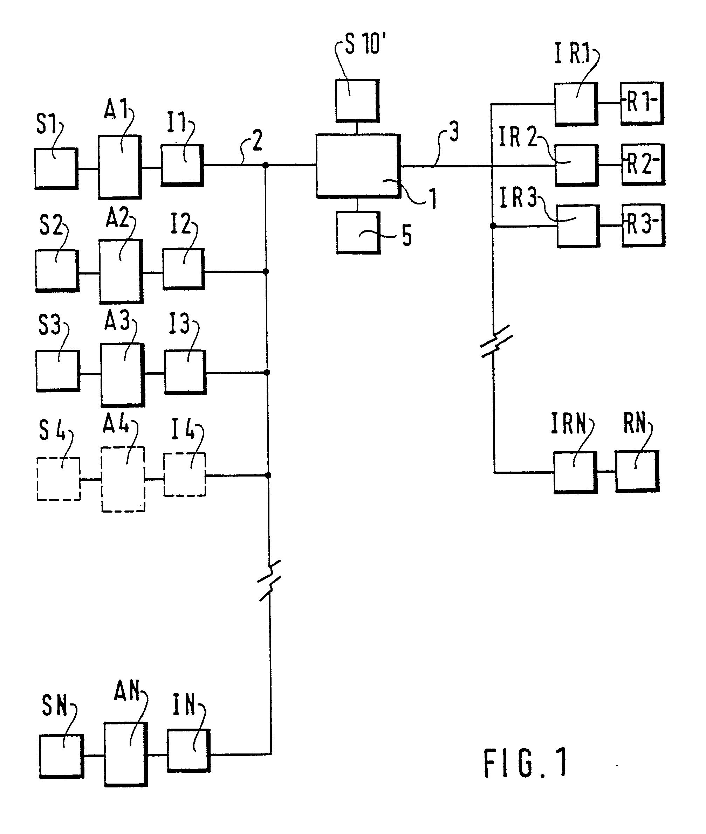

Ein Ausführungsbeispiel der Erfindung ist in der Zeichnung dargestellt und in der nachfolgenden Beschreibung näher erläutert. Es zeigen Figur 1 ein Blockschaltbild der elektronischen Einrichtung, Figur 2 ein Impulsdiagramm als Funktion der Zeit in der Einschaltphase der Einrichtung, Figur 3 ein Ablaufdiagramm zur weiteren Erläuterung der Einschaltphasen, Figur 4 bis Figur 10 weitere Impulsdiagramme als Funktion der Zeit zur Erläuterung verschiedener Betriebszustände der Einrichtung.

### Beschreibung des Ausführungsbeispiels

Eine elektronische Einrichtung für die Sicherung von Fahrzeuginsassen besteht aus einem zentralen Steuergerät 1, das über eine sternförmige Eindrahtleitung 2 mit Sensoren S1, S2, SN verbunden ist, die an unterschiedlichen Einbauorten in einem Fahrzeug angeordnet sind. Jedem der Sensoren S1, ... SN ist eine Auswerteschaltung A1, A2, ... AN und gegebenenfalls eine Schnittstelle I1, I2, ... IN zugeordnet. Weiter sind mit dem Steuergerät 1 über eine Leitung 3 und gegebenenfalls über zwischengeschaltete Schnittstellen IR1, IR2, ... IRN Rückhaltemittel R1, R2, ... RN verbunden. Bei diesen Rückhaltemitteln handelt es sich um sogenannte Airbags, d.h. aufblasbare Gassäcke und/oder Gurtstraffer, die den Fahrer und gegebenenfalls weitere Fahrzeuginsassen bei gefährlichen Unfallsituationen in ihrer Sitzposition festhalten und auf diese Weise schwerwiegende Verletzungen durch Aufprall auf harte Fahrzeugteile verhindern. Die für die Anwendung bei solchen elektronischen Einrichtungen besonderes geeigneten Sensoren sind piezoelektrische Kristalle, die bei Druckbeanspruchung ein Ausgangssignal in Form einer Spannung abgeben. Die den Sensoren S1 ... SN zugeordneten Auswerteschaltungen A1 ... AN bereiten die von den Sensoren S1 ... SN abgegebenen Ausgangssignale schon am jeweiligen Einbauort der Sensoren S1 ... SN derart auf, daß eine den Ausgangssignalen entsprechende Information, gegebenenfalls noch über eine zugeordnete Schnittstelle I1 21746 IN über die vorgesehene Eindrahtleitung 2 zum Steuergerät 1 übertragbar ist. Das Steuergerät 1 umfaßt Speichermittel 5 zur Abspeicherung von Informationen über die Anzahl der vorhandenen Sensoren S1 ... SN, den Sensortyp, den jeweiligen Einbauort der Sensoren S1 ... SN und gegebenenfalls auch über eine Bewertungsfunktion, mit der das von irgendeinem der Sensoren S1 ... SN abgegebene Ausgangssignal zu bewerten ist. Diese vorerwähnten Systemdaten werden vom Kraftfahrzeughersteller zweckmäßig fest vorgegeben ; allerdings sind auch weitere Ausgestaltungen der Erfindung für besondere Anwendungsfälle zweckmäßig, bei denen derartige Systemdaten durch entsprechend ausgestaltete programmierbare Speichermittel noch nachträglich eingegeben oder verändert werden können. Dies empfiehlt sich beispielsweise bei einer Umrüstung des Kraftfahrzeugs auf neue Sensortypen und/oder bei Umbauten, die sich auf die Sicherheitseigenschaften auswirken.

Jade Sensoreinheit, die jeweils einen Sensor S1 ... SN, eine zugeordnete Auswerteschaltung A1 ... AN und gegebenenfalls eine zugeordnete Schnittstelle I1 ... IN umfaßt, besitzt die Fähigkeit zum Austausch von Daten mit dem zentralen Steuergerät 1 über die Leitung 2. Das heißt, jede der zuvor erwähnten Sensoreinheiten kann Informationen von dem Steuergerät 1 empfangen oder zu diesem übermitteln.

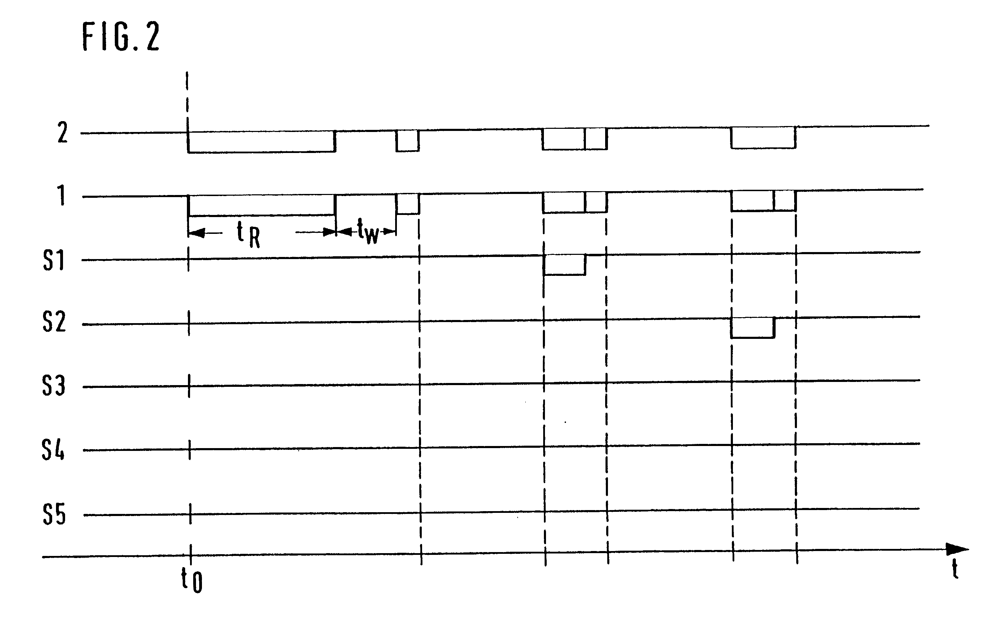

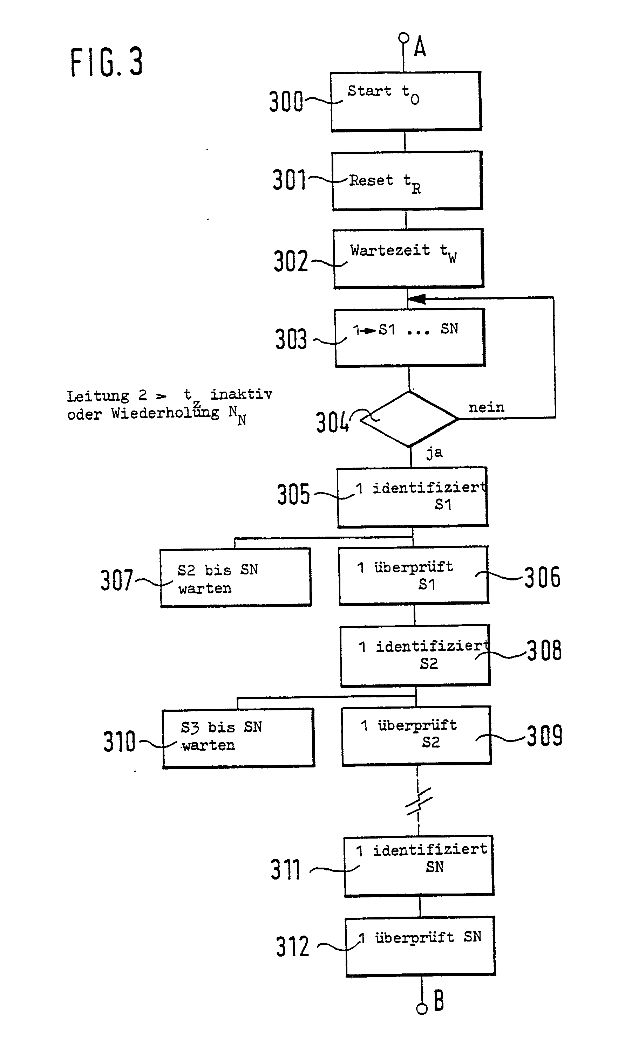

Anhand von Figur 2 und Figur 3 werden im folgenden zunächst die Vorgänge beim Einschalten der elektronischen Einrichtung erläutert. Die elektronische Einrichtung werde beispielsweise zum Zeitpunkt t0 eingeschaltet, wenn das Kraftfahrzeug in Betrieb gesetzt wird. Über die Leitung 2 findet ein bidirektionaler Datenaustausch zwischen dem zentralen Steuergerät 1 und den Sensoren S1 ... SN statt. Das Steuergerät 1 stellt drei zunächst die Anzahl und den jeweiligen Typ der vorhandenen Sensoren fest und überprüft deren Funktionsfähigkeit durch Abfragen. Jedem festgestellten und betriebsfähigen Sensor wird sodann eine fortlaufende Nummer zugeordnet, die auch eine Rangfolge der Sensoren S1 ... SN in dem an die Einschaltphase anschließenden normalen Betriebszustand festlegt.

Im einzelnen werden in der Einschaltphase folgende Ablaufschritte durchgeführt : Im Einschaltzeitpunkt t0 übernimmt das zentrale Steuergerät 1 die Verwaltung des Datenverkehrs auf der Leitung 2. Durch einen im Vergleich zu den im Normalbetrieb vorkommenden Impulslängen langen Impuls mit der Zeitdauer $t_R$ führt das Steuergerät 1 einen Reset der elektronischen Einrichtung durch. An den Reset schließt sich eine Wartezeit $t_W$ an. Unmittelbar nach Ablauf dieser Wartezeit $t_W$ sendet das Steuergerät 1 einen Impuls aus und fordert damit alle Sensoren S1 ... S5 auf, mit der Übermittlung des für jeden Sensor S1 ... S5 charakteristischen Kennwortes zu beginnen. Im jetzt besprochenen Ausführungsbeispiel werde angenommen, daß insgesamt fünf Sensoren S1 bis S5 (also N = 5) dem Steuergerät 1 zugeordnet seien. Auf diese Aufforderung hin geben alle Sensoren S1 bis S5 ihr Kennwort aus. Während dieser Ausgabe wartet das Steuergerät 1 passiv, bis sich einer der Sensoren S1, S2, ... S5 durchgesetzt hat. Anzeichen dafür kann sein, daß die Leitung 2 länger als ein Zeitintervall $t_Z$ inaktiv ist oder, daß eine unveränderte Information in einem gleichen zeitlichen Abstand laufend über die Leitung 2 übertragen wird. Bei dieser Information handelt es sich um ein spezielles Kennwort, beispielsweise das Kennwort des Sensors S1. Das Steuergerät 1 empfängt dieses Kennwort, identifiziert anhand dieses Kennwortes den Sensor S1 und ordnet diesem eine, eine Prioritätenfolge festlegende, laufende Ordnungszahl zu, beispielsweise die Nummer 1. Nach der Festlegung der Rangfolge durch die Zuordnung der Nummer 1 beginnt das Steuergerät 1 mit dem siegreichen Sensor 1 eine bidirektionale Kommunikation. Dabei erfährt der Sensor S1 seine die ihm vom Steuergerät 1 zugeteilte Nummer. Das Steuergerät 1 startet gegebenenfalls einen Testzyklus des Sensors S1 und erhält dadurch Angaben über die Funktionsfähigkeit dieses Sensors, seine Einsatzbereitschaft und gegebenenfalls auch über seinen Einbauort. Während dieser Kommunikationsphase zwischen dem Steuergerät 1 und dem Sensor S1 warten die zunächst die nicht erfolgreichen weiteren Sensoren S2 bis S5 auf das Ende der Kommunikationsphase. Im Anschluß daran wird das Einschaltverfahren fortgesetzt, um auch eine Kommunikation des Steuergerätes 1 mit den verbleibenden Sensoren S2 bis S5 zu ermöglichen. Dazu werden alle Sensoren bis auf den ersten siegreichen Sensor S1 aufgefordert, die Phase der Kennwortausgabe zu wiederholen, bis sich ein zweiter Sensor durchgesetzt hat. Es erfolgt dann der zuvor beschriebene Dialog zwischen dem Steuergerät 1 und dem zweiten siegreichen Sensor, beispielsweise dem Sensor S2. Dieses Verfahren wird fortgesetzt, bis alle betriebsbereiten Sensoren die Ablaufvorgänge der Einschaltphase überstanden haben. Im Anchluß daran bringt das Steuergerät 1 die elektronische Einrichtung in den Normalbetrieb, auf dessen Ablauf weiter unten noch eingegangen wird. Zunächst wird jedoch im folgenden noch ausführlicher auf den Kommunikationsablauf während der Einschaltphase eingegangen.

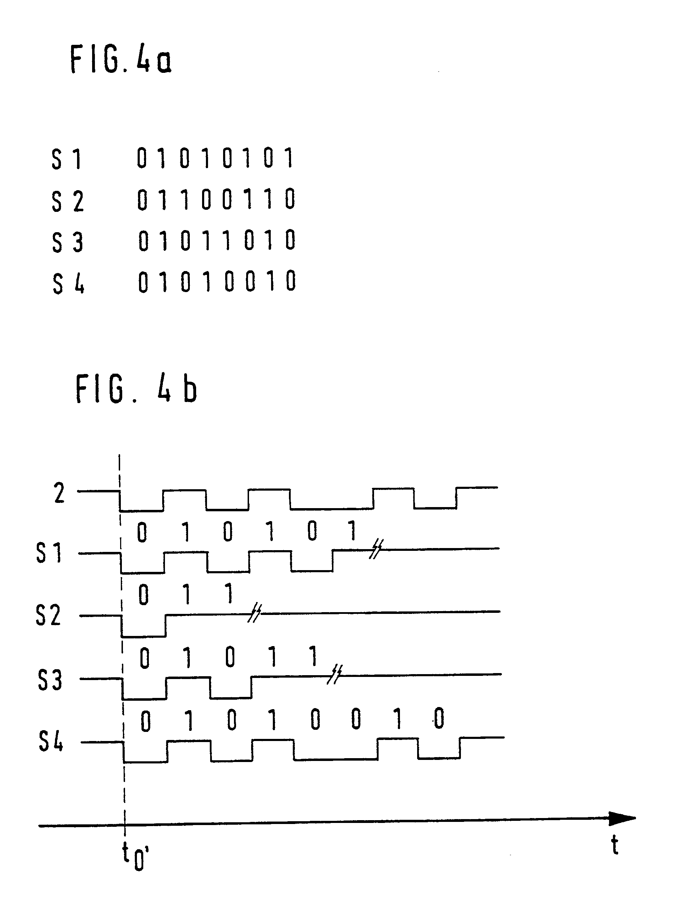

In einem ersten zweckmäßigen Ausführungsbeispiel der Erfindung, das anhand von Figur 4 näher erläutert wird, geben nach der schon erwähnten Aufforderung des Steuergerätes 1 alle angeschlossenen Sensoren — in Figur 4 werde angenommen, daß insgesamt vier Sensoren S1 bis S4 angeschlsossen seien — gleichzeitig die jeden Sensor charakterisierenden Kennwörter aus. Diese Kennwörter haben die Gestalt von Bitfolgen, die in Figur 4a beispielhaft für jeden der Sensoren S1 bis S4 dargestellt sind. In Figur 4b ist ein Diagramm mit Impulsfolgen als Funktion der Zeit dargestellt. Das Diagramm zeigt die auf der Leitung 2 feststellbaren Impulse sowie die von den Sensoren S1 bis S4 als Kennwörter fungierenden Bitfolgen. Auf der Zeitachse repräsentiert der Zeitpunkt t0' das Ende des Aufforderungsimpulses des Steuergerätes 1 an die Sensoren zur Abgabe ihrer Kennwörter. Nach jedem ausgegebenen Bit der Bitfolge ihrer jeweiligen Kennwortes wird der Status der Leitung 2 von jedem Senior S1 bis S4 daraufhin überprüft, ob das ausgegebene Bit (= Sollwert) mit dem Leitungsstatus (= Istwert) übereinstimmt. Sofern keine Übereinstimmung vorliegt, bedeutet das für den betroffenen Sensor, daß die aktuelle Runde für ihn verloren ist und er keine weiteren Bits seiner Kennwortbitfolge mehr ausgeben darf. Solange der Vergleich jedoch eine Übereinstimmung bestätigt, wird ein weiteres Bit der Kennwortbitfolge ausgegeben, bis die vorgegebene Anzahl der Bits des Kennworts bzw. auch der mehreren Kennwörter abgearbeitet ist. Dieses Verfahren hat zur Folge, daß auf jeden Fall mindestens ein Sensor der Sensoren S1 bis S4 in jeder Runde Sieger bleibt und sich für die Vergabe einer Prioritätsordnungsnummer durch das Steuergerät 1 qualifiziert. Durch eine genügende große Anzahl von Kennwörtern und durch eine hinreichend große zufällige Variation bei der Kennwortbildung läßt sich auch bei einer größeren Anzahl von identischen Sensoren erreichen, daß in jeweils einer Runde nur ein einziger Sensor eine völlige Übereinstimmung der für ihn charakteristischen Bitfolge (Kennwort) mit dem Leitungsstatus erlebt und somit Sieger bleibt. Bei dem in Figur 4 dargestellten Ausführungsbeispiel hat sich der Sensor S4 als Sieger qualifiziert, dem die Bitfolge 01010010 als Kennwort zugeteilt worden war. Wie sich nämlich aus Figur 4b ersehen läßt, hat sich jeweils bei allen Bits dieser Bitfolge eine Übereinstimmung mit dem Status der Leitung 2 ergeben, während bei den übrigen Sensoren S1, S2 und S3 eine nur teilweise Übereinstimmung vorlag.

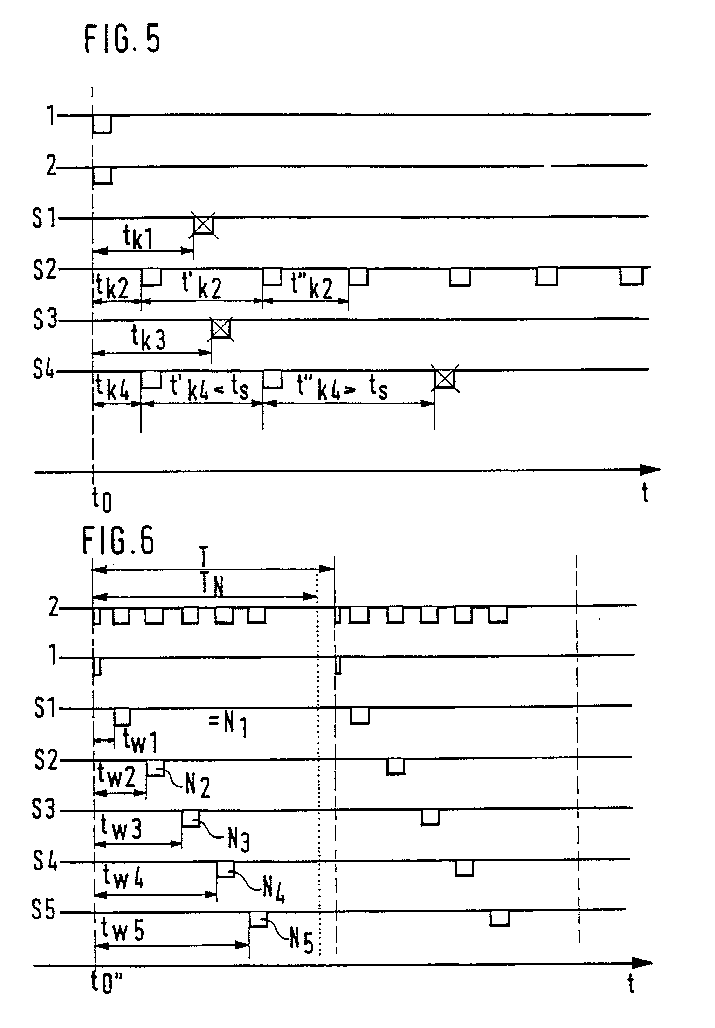

In einer weiteren Variante der Einschaltphase, die anhand des Impulsdiagramms von Figur 5 erläutert wird, ist ebenfalls eine Unterscheidung der verschiedenen Sensoren S1 bis S4 durch verschiedene Kennwörter vorgesehen. Die Aussendung dieser Kennwörter erfolgt jedoch abweichend zu dem zuvor beschriebenen Beispiel nicht gleichzeitig sondern zeitlich versetzt zu verschiedenen Zeitpunkten. Nach Aufforderung zur Abgabe der Kennwörter durch das Steuergerät 1 zum Zeitpunkt t0 startet jeder Sensor S1 bis S4 ein ihm zugeordnetes Zeitintervall $t_{kx}$ (x = 1, 2, 3, 4) und beobachtet den Impulsstatus auf der Leitung 2. Nach Ablauf des für ihn charakteristischen Zeitintervalls $t_{kx}$ gibt der Sensor x die ihm als Kennwort zugeteilte Bitfolge aus, wenn bis dahin, also bis zum Ablauf der Zeit $t_{kx}$ noch keine auf einen anderen Sensor hinweisende Kennung ausgesendet wurde. In dem Diagramm nach Figur 5 sei dem Sensor S1 das charakteristische Zeitintervall $t_{k1}$ zugeordnet, welches länger ist als das dem Sensor S2 zugeordnete Zeitintervall $t_{k2}$ oder das dem Sensor S4 zugeordnete Zeitintervall $t_{k4}$. Während also Sensor S1 und auch Sensor S3 mit der Aussendung ihrer Kennwörter noch warten müssen, da für sie die charakteristische Zeit $t_{k1}$ bzw. $t_{k3}$ noch nicht abgelaufen ist, senden die Sensoren S2 und S4 bereits gleichzeitig nach Ablauf ihrer gleich langen Zeitintervalle $t_{k2}$ und $t_{k4}$ ihre Kennwörter aus. Die Sensoren S1 und S3 geben nach Ablauf der für sie charakteristische Zeitintervalle $t_{k1}$ bzw. $t_{k3}$

keine Kennwörter mehr aus und haben demzufolge diese Runde der Einschaltphase verloren. Die Sensoren, die zuvor ihr Kennwort ausgesandt haben, also die Sensoren S2 und S4 lesen das über die Leitung 2 empfangene Kennwort zurück und vergleichen es mit dem jeweils von ihnen gesendeten Kennwort. Bei Übereinstimmung der Bitfolgen senden sie ein nächstes Kennwort nach belauf einer weiteren Wartezeit $t_{k2}$, bzw. $t_{k4}$, aus. Für diese zusätzlichen Wartezeiten $t_{k2}$, bzw. $t_{k4}$, gilt die zusätzliche Bedingung, daß sie kürzer sind als ein Zeitschwellwert $t_S$. Wie schon zuvor beschrieben, wird während der jeweiligen Wartezeit $t_{k2}$, bzw. $t_{k4}$, die Leitung 2 wieder auf eine fremde Kennung hin überwacht, bei der dann die Ausgabe des eigenen Kennwortes verhindert würde und die laufende Runde für den Sensor verloren wäre. Im gewählten Beispiel seien im Impulsdiagramm gemäß Figur 5 die Wartezeiten $t_{k2}$, und $t_{k4}$, wiederum gleich, die nun gesendeten Kennwörter aber unterschiedlich. Durch die Veroderung (die Leitung 2 sei ein verdrahtetes ODER und beispielsweise low active) wird das Kennwort des Sensors S2 nicht geändert, während das von dem Sensor S4 abgegebene Kennwort geändert wird. Bei dem unmittelbar anschließenden Rücklesevorgang des Kennwortes von der Leitung 2 muß der Sensor S4 einen Unterschied zum gesendeten Kennwort erkennen, während das Kennwort von Sensor S2 nicht verändert wird. Nachdem der Sensor S4 einen Unterschied zwischen dem ausgesandten und wiedergelesenen Kennwort festgestellt hat, wird das gleiche Kennwort nach einer weiteren Wartezeit $t_{k4''}$ gesendet. Für diese Wartezeit gilt die Bedingung, daß sie größer ist als der Zeitschwellwert $t_S$. Sensor S2 dagegen sendet sein nächstes Kennwort nach einer Zeit $t_{k2''}$, für die die Bedingung gilt, daß sie kleiner ist als der Zeitschwellwert $t_S$. Dies hat aber zur Folge, daß das zusätzliche Kennwort des Sensors S2 jetzt auf jeden Fall zuerst vollständig auf der Leitung 2 vorliegt, und Sensor S4 in dieser Runde aufgibt. In diesem Ablauf kann somit Sensor S2 alle ihm zugeordneten Kennwörter ausgeben, so daß das Steuergerät 1 ihn als Sieger dieser Runde anerkennt und die schon obenbeschriebene bidirektionale Kommunikation beginnt.

Zweckmäßig kann eine Variation der Kennwörter durch folgende Einfludgrößen erzielt werden. Einerseits durch feste, d.h. vorgegebene, Größen wie beispielsweise Typ der jeweils verwendeten Sensoren, Seriennummer des jeweiligen Sensors und/oder der elektronischen Einheit und/oder ein den jeweiligen Entwicklungsstand der elektronischen Einrichtung kennzeichnendes Merkmal. Zusätzlich können variable oder auch zufällige Größen für eine weitere Variationsbreite herangezogen werden. Variable Größen dieser Art können beispielsweise sein der Inhalt bestimmter festgelegter Speicherzellen von Speichermitteln unmittelbar nach dem Einschalten der elektronischen Einrichtung, zufällige Eingangssignale, wie beispielsweise die durch einen Analog-Digital-Wandler umgewandelte Versorgungsspannung der elektronischen Einrichtung, oder aber auch zufällige interne Signale, zum Beispiel das in einen digitalen Wert umgewandelte anloge Signal eines angeschlossenen Sensors S2 bis SN.

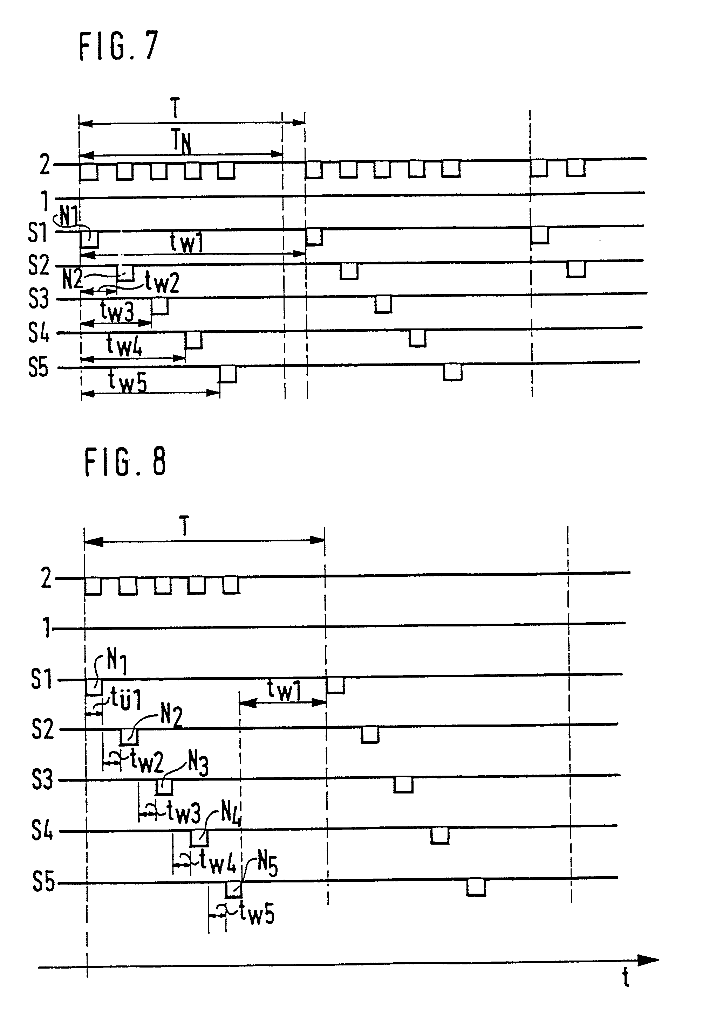

Für das folgende werde angenommen, daß die Einschaltphase beendet sei und daß das Steuergerät jedem angeschlossenen Sensor eine die Rangfolge festlegende Ordnungsnummer zugeteilt habe. Es werde wieder angenommen, daß die elektronische Einrichtung insgesamt fünf Sensoren S1 bis S5 umfasse. Im Normalbetrieb sind wiederum zwei unterschiedliche Betriebsweisen der elektronischen Einrichtung möglich, nämlich eine Betriebsweise mit Synchronisierung der Ablaufschritte durch das Steuergerät 1 oder alternativ eine Betriebsweise ohne eine derartige Synchronisierung der Ablaufschritte durch das Steuergerät 1. Zunächst werde auf die Betriebsweise mit Synchronisierung durch das Steuergerät 1 eingegangen, die anhand der in Figur 6 dargestellten Impulsdiagramme erläutert wird. In dieser Betriebsweise (mit Synchronisierung) gibt das Steuergerät 1 zum Zeitpunkt t0″ eine feste Zeitmarke vor, an der jeder Sensor S1, S2, ... S5 eine für ihn charakteristische Wartezeit $t_{WX}$ bis zum Senden seiner Daten ausrichtet. Diese Zeitmarke kann aus einer oder gegebenenfalls mehreren Signalflanken und-/oder einem oder mehreren Datenwörtern bestehen. Für den Fall, daß diese Zeitmarke aus einem oder mehreren Datenwörtern besteht, können zusätzlich Steuerinformationen von dem Steuergerät 1 an die Sensoren S1 bis S5 übergeben werden. Gemäß Diagramm nach Figur 6 starten die Sensoren S1 bis S5 ihre Wartezeiten $t_{WX}$ im Anschluß an die vom Steuergerät 1 abgegebene Zeitmarke. Nach Ablauf der jeweiligen Wartezeit $t_{W1}$, $t_{W2}$, ... $t_{W5}$ sendet der jeweilige Sensor S1 bis S5 seine Nachricht N1, N2, .... N5 zu dem Steuergerät 1. Nach der Übermittlung warten die Sensoren S1 bis S5 zunächst das Ende des Zeitintervalls $T_N$ ab, um dann die am Ende des Zeitintervalls T erscheinende nächste Zeitmarke des Steuergerätes 1 zu erkennen. Im folgenden wird anhand der Impulsdiagramme nach den Figuren 7 und 8 eine Betriebsweise der elektronischen Einrichtung ohne Synchronisierung durch das Steuergerät 1 erläutert. Bei dieser Betriebsweise ist die Verbindung zwischen dem Steuergerät 1 und den Sensoren — auch in diesem Beispiel sind wieder fünf Sensoren S1 bis S5 vorgesehen — unidirektional, das heißt, es werden nur Daten von den Sensoren zu dem Steuergerät 1 übertragen. In vorteilhaften Ausgestaltungen der Erfindung lassen sich hierbei zwei Unterfälle unterscheiden.

Es wird ein als Master fungierender Sensor vorgegeben bei dem es sich vorzugsweise um den ersten in der zeitlichen Reihenfolge handelt, der also in der Einschaltphase die höchste Priorität gewonnen hat und von dem Steuergerät 1 die Ordnungsnummer 1 zuerkannt hielt. Dieser Mastersensor, es sei der Sensor S1, sendet im zeitlichen Abstand $t_{W1}$ = T seine Nachricht N1 zum Steuergerät 1. Mit dem Erscheinen der Nachricht N1 auf der Leitung 2 beginnen die übrigen Sensoren S2 bis S5 ihre Wartezeiten $t_{W2}$ bis $t_{W5}$ und übertragen anschließend ihre Nachrichten N2 bis N5. Im Anschluß an die jeweilige Übertragung warten die Sensoren S2 bis S5 auf den Ablauf der Zeit $T_N$, um dann als Zeitmarke die Nachricht N1 des Sensors S1 zu erkennen.

Für die zuletzt beschriebene Betriebsweise ohne Synchronisierung durch das Steuergerät 1 und die zuvor beschriebene Betriebsweise mit Synchronisierung durch das Steuergerät 1 gelten gemeinsam folgende Voraussetzungen. Das Zeitintervall $t_{WX}$ muß größer sein als das Zeitintervall $t_{W(x-1)}$ + Übertragungszeit$_{(x-1)}$. Die Wartezeit $t_{WX}$ kann fest sein oder in der Einschaltphase von Steuergerät 1 festgelegt werden. Bis zur Zeit $T_N$ müssen alle Nachrichten N1 bis N5 gesendet sein. Die nicht nutzbare Zeit, das heißt die Differenz T $T_N$ dient zur sicheren Erkennbarkeit der vom Steuergerät 1 abgegeben Zeitmarke. Die Nachrichten N1 bis N5 können für jeden der beteiligten Sensoren S1 bis S5 von verschiedenem Format und von unterschiedlicher Länge sein. Beispielsweise können Unterschiede bestehen in der Länge des Zeitfensters, das für die Aussendung der Nachricht zur Verfügung steht, in der Anzahl der Datenworte der Nachricht, im Format der Datenworte sowie in weiteren Unterscheidungskriterien, wie beispielsweise Start-/Stopp-Bit, Parity-Bit, Baudraten.

In einem weiteren Fall der Betriebsweise ohne Synchronisierung durch das Steuergerät orientieren sich die Sensoren an dem in der zeitlichen Bangfolge vorangestellten Sensor. Als "Mastersensor" werde wieder der Sensor S1 angenommen. Die gerade nicht sendenden Sensoren überwachen die Leitung 2 und erkennen dadurch den Zustand und den jeweils sendenden Sensor. Dieser Unterfall der Betriebsweise ohne Synchronisierung durch das Steuergerät 1 wird anhand der Impulsdiagramme von Figur 8 erläutert. Wie schon erwähnt, sei der Sensor S1 der Mastersensor. Sensor 1 sendet seine Nachricht N1 innerhalb der Übertragungszeit $t_{Ü1}$ zum Steuergerät 1. Nach einer Wartezeit $t_{W2}$ im Anschluß an das Ende der Übertragung der Nachricht N1 durch den Sensor S1 sendet Sensor S2 seine Nachricht N2. Danach senden die Sensoren S3, S4, S5 jeweils nach Ablauf der ihnen zugeordneten Wartezeiten $t_{W3}$, $t_{W4}$ und $t_{W5}$. In diesem Beispielfall gilt

$$t_{Ü1} = t_{Ü2} = ... = t_{ÜN} := t_Ü$$

$$t_{W2} = ... t_{WN} := t_W.$$

$t_{W1}$ ist die Ergänzung zur vollen Wiederholzeit T. So wird auch bei unterschiedlicher Anzahl von Sensoren die gleiche Zeit T erreicht.

Im folgenden werden einige Störfälle betrachtet, um zu zeigen, wie flexibel sich die elektronische Einrichtung beim Auftreten derartiger Störfälle verhält.

Wie oben schon beschrieben, melden sich in der Einschaltphase alle funktionsfähigen Sensoren S1 bis SN und bauen nach dem Reset eine Kommunikation mit dem Steuergerät 1 auf. Es werde nun angenommen, daß einer der Sensoren S1 bis SN nicht funktionsfähig sei und sich nicht in der beschriebenen Weise (vgl. auch Figur 2) melde. Da das Steuergerät 1 die Anzahl der in der elektronischen Einrichtung vorhandenen Sensoren S1 bis SN kennt, versucht es, den oder gegebenenfalls die fehlerhaften Sensoren durch eine mehrfach wiederholte Meldeaufforderung zur Ausgabe seines Kennwortes zu veranlassen. Erst, nachdem auf die wiederholte Meldeaufforderung keine Antwort eingegangen ist, wird der betreffende Sensor, beispielsweise der Sensor S3, als defekt registriert. Dem Fahrer des Fahrzeugs kann eine entsprechende Fehleranzeige übermittelt werden. Schließlich erfolgt aber der Übergang in den Normalbetrieb mit den noch verbliebenen funktionsfähigen Sensoren.

Für die folgende Betrachtung werde angenommen, daß in der Einschaltphase alle in der elektronischen Einrichtung vorhandenen Sensoren als funktionsfähig erkannt worden sind und daß erst im Anschluß an die Einschaltphase mindestens ein Sensor ausfällt. Bei der obenbeschriebenen Betriebsweise der Einrichtung wurde unterschieden zwischen einer Synchronisierung der Einrichtung durch das Steuergerät 1 und einer Betriebsweise ohne Synchronisierung durch das Steuergerät 1. Im Falle der Synchronisierung der Einrichtung durch das Steuergerät 1 bewirkt ein Ausfall eines oder mehrerer Sensoren S1 bis SN keine Änderung im Impulsdiagramm gemäß Figur 6. Das entsprechende Zeitfenster, das für die Meldung des defekten Sensors vorgesehen war, bleibt einfach leer. Die Wiedereingliederung des nach einem Defekt wieder funktionsfähigen Sensors erfolgt auf einfache Weise durch die Wiederaufnahme der Informationsübertragung durch den betreffenden Sensor. Für den Fall, daß der Sensor im Verlauf einer Störung, zum Beispiel durch Unterbrechung der Spannungsversorgung, jedoch auch seine ihm von dem Steuergerät 1 zugeteilte Ordnungsnummer vergessen hat, die ja die Prioritätenfolge festlegt, kann in dem nun freien Zeitfenster eine bidirektionale Kommunikation zwischen dem wieder funktionsfähigen Sensor und dem Steuergerät 1 stattfinden. Für den Fall, daß mehrere Sensoren auf diese Art gestört sein sollte, kann das Steuergerät 1 im freien Zeitfenster eine abgewandelte Form des Kommunikationsaufbaus starten. Die Unterscheidung der Sensoren kann beispielsweise durch unterschiedliche Kennwörter und eine Zeitverschiebung durch Periodenversatz erfolgen.

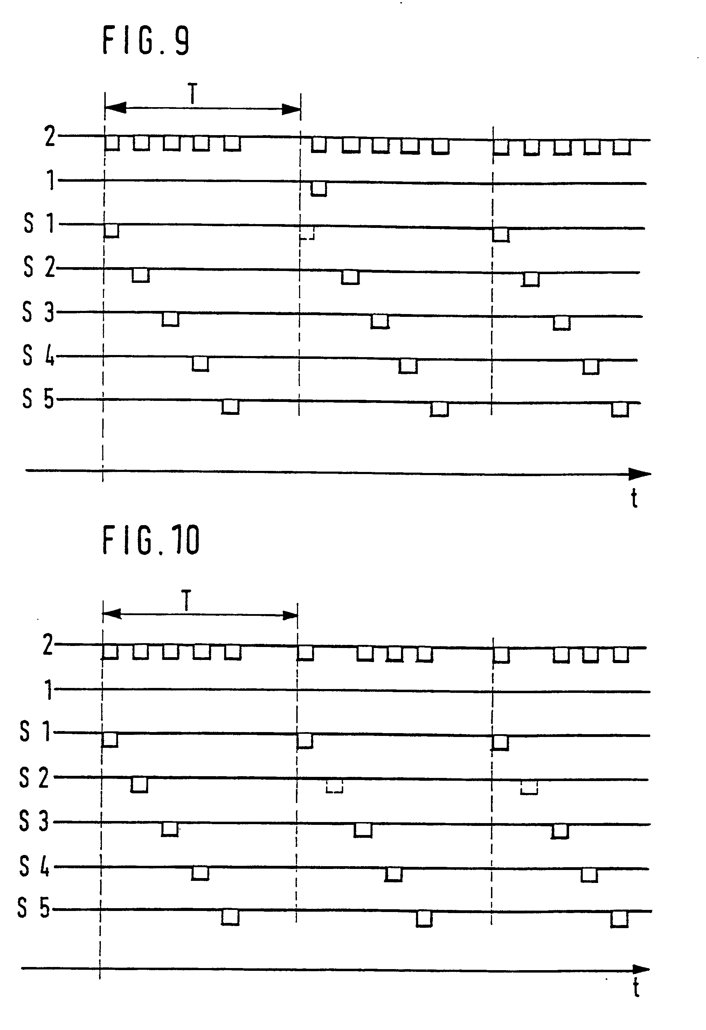

In der Betriebsweise der elektronischen Einrichtung ohne Synchronisation durch das Steuergerät 1 ist im Unterfall der Orientierung der Sensoren an einem Mastersensor ein gleichartiges Verfahren denkbar, sofern einer oder mehrere der Sensoren S2 bis SN ausgefallen waren. Sollte jedoch Sensor S1 ausfallen, der ja von dem Steuergerät 1 in der Einschaltphase die höchste Priorität erhalten hatte und der als Mastersensor fungiert, muß das Steuergerät 1 selbst die Zeitmarke für die Orientierung der übrigen Sensoren S2 bis SN Abgeben. Dieser Fall ist im Diagramm gemäß Figur 9 dargestellt.

Im weiteren Unterfall der Betriebsweise der elektronischen Einrichtung ohne Synchronisierung und ohne Einrichtung eines Sensors als Mastersensor überwachen sämtliche Sensoren S1 bis SN die Leitung 2 und erkennen dadurch sofort den Ausfall irgendeines Sensors. Zum Ausgleich für das leere Zeitfenster werden die nachfolgenden Wartezeiten entsprechend verlängert. Dies sei anhand des Impulsdiagramms der Figur 10 an einem Beispiel verdeutlicht. Es wird angenommen, daß Sensor S2 ausgefallen sei. Der Sensor S3 erkennt dies und verlängert seine Wartezeit $t_{W3}$ um die Übertragungszeit $t_{\ddot{U}2} (= t_{\ddot{U}}) \cdot t_{W3}$ wird gestartet. Nach Ablauf der Wartezeit $t_{W3}$ gibt Sensor S3 dann seine Nachricht aus. Das Wiedereinspuren des nach dem Defekt wieder funktionsfähigen Sensors S2 ist durch das vorhandene leere Zeitfenster, ähnlich wie oben schon beschrieben, möglich.

Bei den bisherigen Ausführungsbeispielen wurde davon ausgegangen, daß ein zunächst ausgefallener Sensor wieder funktionsfähig wird und anschließend in den normalen Betriebsablauf der elektronischen Einrichtung wieder eingegliedert werden kann. Sollte jedoch einer der Sensoren S1 bis SN dauerhaft funktionsunfähig bleiben, läßt die außerordentliche Flexibilität der elektronischen Einrichtung eine zweckentsprechende Änderung der Betriebsweise zu. Beispielsweise kann das Steuergerät 1 die Ausgangssignale der noch vorbleibenden funktionsfähigen Sensoren mit einem anderen Gewichtsfaktor belegen, so daß der Ausfall des defekten Sensors weitgehend kompensiert werden kann. Als Alternative kann auch das Auslöseverfahren der Rückhaltemittel in Abhängigkeit von den Sensorsignalen selbst geändert werden. Wenn beispielsweise mit allen vorhandenen funktionsfähigen Sensoren eine Auslösung von Rückhaltemitteln erst dann ermöglicht wurde, wenn von zwei einen Frontalaufprall anzeigenden Sensoren ein Ausgangssignal vorlag, kann das Steuergerät 1 jetzt entscheiden, daß das Rückhaltemittel bereits dann ausgelöst wird, wenn lediglich das Ausgangssignal eines einzigen Sensors vorliegt.

Aus Gründen der Kostenersparnis ist es anzustreben, für alle Sensoren S1 bis SN identische Sensoren zu verwenden. Um optimale Sicherheitskriterien abzuleiten, kann es jedoch dann zweckmäßig sein, den Ausgangssignalen dieser Sensoren je nach Einbauort ein unterschiedliches Gewicht zuzumessen und gegebenenfalls unterschiedliche Auslöseverfahren der Rückhaltemittel zu bewirken. Beispielsweise ist es bei einem Heckaufprall nicht zweckmäßig, den Airbag zu aktivieren, da bei einem Heckaufprall die Fahrzeuginsassen nicht in Fahrtrichtung des Fahrzeugs beschleunigt werden. In diesem Fall des Heckaufpralls wäre es lediglich notwendig, das Rückhaltemittel Gurtstraffer einzusetzen. Falls also das Steuergerät Informationen eines einen Heckaufprall registrierenden Sensors erfaßt, wird das zuvor beschriebene Auslöseverfahren der Rückhaltemittel angewendet. Eingangs wurde erwähnt, daß in Speichermitteln des Steuergerätes 1 selbst Informationen über Art und Einbauort der Sensoren S1 bis SN abgespeichert sind. Insbesondere bei der Verwendung identischer Sensoren, die lediglich an anderen Einbauorten innerhalb des Fahrzeugs untergebracht sind, erweist es sich als zweckmäßig, daß die Sensoren selbst die Informationen über ihre Einbaulage zusammen mit einem sensorspezifischen Kennzeichen zum Steuergerät 1 übermitteln, so daß das Steuergerät 1 den jeweiligen Sensor im weiteren Betriebsablauf identifizieren kann.

In besonders vorteilhafter Weise dienen die den Sensoren S1 bis SN zugeordneten Auswerteschaltungen A1 bis AN auch zur Aufbereitung der Ausgangssignale der Sensoren. Auf diese Weise ist es möglich, dem Steuergerät 1 nicht nur das eigentliche, von der Beschleunigung abhängige Ausgangssignal des jeweiligen Sensors S1 bis SN zu übermitteln, sondern zum Beispiel auch lediglich die Spitzenwerte des Beschleunigungssignals, einen bestimmen Mittelwert des Ausgangssignals des Sensors oder beispielsweise auch einen Integrationswert des Signals. Schließlich kann auch die am Sensor liegende Versorgungsspannung überprüft werden und es können Fehlerinformationen zum Steuergerät 1 übermittelt werden, die beispielsweise einen schleichenden Leistungsabfall eines bestimmten Sensors oder eine plötzlich auftretende Funktionsunfähigkeit erkennen lassen. Die elektronische Einrichtung bietet weiterhin den Vorteil, daß der bei herkömmlichen Sicherheitseinrichtungen aus Redundanzgründen erforderliche Sicherheitsschalter entfallen kann, da die Auslösung eines Rückhaltemittels nur durch eine sinnvolle Komminikation zwischen den Sensoren S1 bis SN und dem Steuergerät 1 einerseits und dem Steuergerät 1 und den Rückhaltemitteln R1 bis RN andererseits möglich ist.

Als Übertragungsleitung 2, 3 wird zweckmäßig eine Eindrahtleitung gewählt, was den Aufwand für Verkabelung und die gegebenenfalls erforderlichen Schnittverbindungen außerordentlich verringert und zudem die Zuverlässigkeit noch erhöht. Als besonders zweckmäßig können als Leitungen 2, 3 auch Lichtleiter verwendet werden. In diesem Fall dienen die Schnittstellen I1 bis IN und IR1 bis IRN zweckmäßig gleichzeitig der Wandlung zwischen elektronischen und optischen Signalen.

Die erfindungsgemäße elektronische Einrichtung ermöglicht den Einbau des Steuergerätes 1 an einem beliebigen, dafür besonders geeigneten Einbauort im Fahrzeug und die Anbringung der Sensoren S1 bis SN an den dafür geeignetsten Einbauorten. In einer vorteilhaften weiteren Ausgestaltung der Erfindung kann jedoch mindestens ein Sensor S10' im Steuergerät 1 selbst oder zumindest in dessen unmittelbarer Nachbarschaft angeordnet sein. Auf diese Weise ist eine Erfassung von auf einen Unfallhergang zurückzuführenden Beschleunigungswerten und damit eine Auslösung von Rückhaltemitteln auch dann noch möglich, wenn durch einen Defekt und/oder durch ein Unfallgeschehen die Leitung 2 zwischen den Sensoren S1 bis SN unterbrochen sein sollte.

## Patentansprüche

1. Elektronische Einrichtung für die Sicherung von Fahrzeuginsassen mit mindestens einem Sensor (S1, ... SN) zur Erfassung unfallspezifischer Parameter (wie zum Beispiel der Fahrzeugbeschleunigung), einem Steuergerät (1) zur Auswertung der Sensorsignale und mit vom Steuergerät (1) aktivierbaren Rückhaltemitteln (R1, ... RN) (z.B. Airbag, Gurtstraffer) für die Fahrzeuginsassen, dadurch gekennzeichnet, daß
am Fahrzeug N Sensoren (S1, ... SN) angeordnet sind, daß jeder der N Sensoren (S1, ... SN) über eine einzige serielle Datenleitung (2) (serieller Bus) mit dem Steuergerät (1) verbunden ist und daß jedem der N Sensoren (S1 bis SN) je eine Auswerteschaltung (A1 bis AN) zugeordnet ist, die das Ausgangssignal des jeweiligen Sensors (S1 bis SN) in eine über die Datenleitung (2) übertragbare Signalfolge umwandelt.

2. Einrichtung nach Anspruch 1, dadurch gekennzeichnet, daß die Auswerteschaltungen (A1, A2, ... AN) analoge Sensorausgangssignale der Sensoren (S1, S2, ... SN) gegebenenfalls in Verbindung mit den schnittstellenschaltungen (I1, I2, ... IN) in digitale signale umwandeln.

3. Einrichtung nach einem der Ansprüche 1 bis 2, dadurch gekennzeichnet, daß als Datenleitung (2, 3) eine Lichtleitfaser vorgesehen ist und daß die Schnittstellenschaltungen (I1 bis IN) die von den Sensoren (S1 bis SN) abgegebenen und gegebenenfalls von den aus Auswerteschaltungen (A1 bis AN) aufbereiteten elektronischen Signale in optische Signale und die vom Steuergerät (1) übermittelten optischen Signale in elektronische Signale umsetzen.

4. Einrichtung nach einem der Ansprüche 1 bis 3, dadurch gekennzeichnet, daß die Auswerteschaltungen (A1 bis AN) den Typ der Sensoren (S1 bis SN) und deren Einbauort im Fahrzeug kennzeichnende Signale erzeugen und zum Steuergerät (1) übertragen.

5. Einrichtung nach einem der Ansprüche 1 bis 4, dadurch gekennzeichnet, daß das Steuergerät (1) Speichermittel (4) zur Speicherung von den Typ und den Einbauort der Sensoren (S1 bis SN) im Fahrzeug kennzeichnenden Signalen umfaßt.

6. Einrichtung nach einem der Ansprüche 1 bis 5, dadurch gekennzeichnet, daß wenigstens ein Sensor (S10′) im Steuergerät (1) selbst oder wenigstens in dessen unmittelbarer Nachbarschaft angeordnet ist.

7. Einrichtung nach einem der Ansprüche 1 bis 6, dadurch gekennzeichnet, daß das Steuergerät (1) Vergleichsmittel umfaßt, die zwecks Identifizierung des jeweiligen Sensors (S1 bis SN) die in den Speichermitteln (4) abgelegten Angaben über Typ und Einbauort der Sensoren (S1 bis SN) mit den von den Auswerteschaltungen (A1, A2, ... AN) übermittelten Daten vergleichen.

8. Einrichtung nach einem der Ansprüche 1 bis 7, dadurch gekennzeichnet, daß das Steuergerät (1) Mittel zur Feststellung eines nicht betriebsfähigen Sensors (S1, ... SN) umfaßt, und daß bei Feststellung eines nichts betriebsfähigen Sensors das Ausgangssignal eines oder gegebenfalls mehrerer betriebsfähiger Sensoren mit einem neuen Gewichtsfaktor bewertet wird.

9. Betriebsverfahren für eine elektronische Einrichtung nach einem der Ansprüche 1 bis 8, gekennzeichnet durch folgende Verfahrensschritte :

   a) das Steuergerät (1) stellt Anzahl und Typ der vorhandenen funktionsfähigen Sensoren (S1, ... SN) fest ;

   b) jedem festgestellten Sensor wird eine, eine Rangfolge kennzeichnende fortlaufende Nummer zugeordnet ;

   c) die fortlaufende Nummer bestimmt die Reihenfolge der Kommunikation der Sensoren (S1, ... SN) mit dem Steuergerät (1).

10. Betriebsverfahren nach Anspruch 9, dadurch gekennzeichnet, daß nach dem Einschalten der elektronischen Einrichtung das Steuergerät (1) durch eine im Vergleich zum Normalbetrieb lange Aktivierungszeit ($t_R$) der Leitung (2) einen Reset der elektronischen Einrichtung durchführt und nach einer Wartezeit ($T_1$) alle Sensoren (S1 bis SN) zur Abgabe eines für sie charakteristischen Kennwortes auffordert.

11. Verfahren nach einem der Ansprüche 9 und 10, dadurch gekennzeichnet, daß das Steuergerät nach erstmaliger erfolgreicher und vollständiger Identifizierung eines ersten Sensors der Sensoren (S1 bis SN) diesem eine die höchste Prioritätsstufe kennzeichnende Ordnungsnummer zuordnet und anschließend mit diesem Sensor eine bidirektionale Kommunikation beginnt, während die übrigen noch nicht identifizierten Sensoren bis zur Beendigung dieser bidirektionalen Kommunikation warten.

12. Verfahren nach einem der Ansprüche 9 bis 11, dadurch gekennzeichnet, daß nach erfolgreicher Identifizierung eines ersten Sensors und einem bidirektionalen Informationsaustausch zwischen diesem Sensor und dem Steuergerät (1) das Steuergerät (1) sukzessive weitere Sensoren der Sensoren (S1 bis SN) identifiziert und mit diesen eine bidirektionale Kommunikation führt, bis der Reihenfolge nach alle Sensoren mit einer ihre jeweilige Priorität kennzeichnenden Ordnungsnummer belegt sind.

13. Verfahren nach einem der Ansprüche 9 bis 12, dadurch gekennzeichnet, daß nach der Aufforderung durch das Steuergerät (1) alle Sensoren (S1, ... SN) gleichzeitig ein für sie spezifisches Kennwort oder gegebenenfalls mehrere Kennwörter in Form einer Bitfolge ausgeben, daß die Sensoren (S1, ... SN) nach jeder Ausgabe eines Bits der Bitfolge den Status der Leitung (2) daraufhin überprüfen, ob das ausgegebene Bit mit dem Status der Leitung (2) übereinstimmt, und daß bei Feststellung einer nicht Übereinstimmung zwischen dem jeweils zuletzt ausgegebenen Bit der Bitfolge und dem Status der Leitung (2) der jeweilige Sensor (S1, ... SN) seine Aussendung bis zu einer erneuten Aufforderung durch das Steuergerät (1) beendet.

14. Verfahren nach einem der Ansprüche 9 bis 13, dadurch gekennzeichnet, daß nach Aufforderung durch das Steuergerät (1) jeder Sensor (S1, ... SN) zunächst eine für ihn charakteristische Zeit ($t_{kx}$) (x = 1 bis N) abwartet und erst nach Ablauf dieser Zeit dann mit der Ausgabe seines Kennwortes beginnt, wenn auf der gleichzeitig von ihm beobachteten Leitung (2) kein von einem anderen Sensor der Sensoren (S1, ... SN) stammendes Kennwort festgestellt wird.

15. Verfahren nach Anspruch 14, dadurch gekennzeichnet, daß nach Sendung eines ersten vollständigen Kennwortes die das Kennwort aussendenden Sensoren das jeweils zuvor ausgesandte Kennwort über die Leitung (2) zurücklessen, dieses zurückgelesene Kennwort mit dem zuvor ausgesandten Kennwort vergleichen und nach Ablauf einer zweiten Wartezeit ($t_{kx'}$) (x = 1 bis N) nur dann aussenden, wenn ein vergleich zwischen dem ausgesandten und dem über die Leitung (2) zurückgelesenen Kennwort Identität ergibt und wenn während der zweiten Wartezeit auf der Leitung (2) kein Kennwort eines anderen Sensors der Sensoren (S1, ... SN) festgestellt wird.

16. Verfahren nach einem der Ansprüche 9 bis 15, dadurch gekennzeichnet, daß im Anschluß an die Einschaltphase für den Datenaustausch zwischen den Sensoren (S1, ... SN) und dem Steuergerät (S1) das Steuergerät (S1) eine Zeitmarke vorgibt, nach der sich jeder Sensor (S1, ... SN) richtet und daß jeder der Sensoren (S1, ... SN) seine Nachricht an das Steuergerät (S1) erst dann übermittelt, wenn ausgehend von der durch das Steuergerät (1) festgelegten Zeitmarke eine für ihn charakteristische wartezeit ($t_{WX}$) mit (x = 1 bis N) abgelaufen ist.

17. Verfahren nach einem der Ansprüche 9 bis 16, dadurch gekennzeichnet, daß bei Nichtsynchronisierung des Datenaustausches zwischen dem Steuergerät (1) und den Sensoren (S1, ... SN) vom Steuergerät (1) während der Einschaltphase der Sensor mit der höchsten Priorität (Ornungszahl 1) als "Mastersensor" bestimmt wird, daß dieser Mastersensor (S1) seine Nachricht ($N_1$) nach einem Zeitraum ($t_{W1}$) = T zum Steuergerät (1) übermittelt, und daß die übrigen Sensoren (S2, ... SN) sich nach dem Mastersensor (S1) richtend ihre Nachrichten ($N_2$, ... $N_N$) nach Ablauf einer jeweiligen spezifischen wartezeit ($t_{W2}$, ... $t_{WN}$) im Anschluß an das Ende der Übertragungszeit des Sensors (S1) an das Steuergerät (S1) übermitteln.

18. Verfahren nach einem der Ansprüche 9 bis 17, dadurch gekennzeichnet, daß neben den Ausgangssignalen der Sensoren (S1, ... SN), gegebenenfalls nach Auswertung durch die Auswerteschaltungen (A1, ... AN), zusätzlich oder alternativ auch noch jeweils Maximalwerte, Mittelwerte und Integralwerte des Ausgangssignales der Sensoren zu dem Steuergerät (S1) übermittelt werden.

19. Verfahren nach einem der Ansprüche 9 bis 18, dadurch gekennzeichnet, daß zumindest in der Einschaltphase, gegebenenfalls auch in Prüfphasen von den Auswerteschaltungen (A1, ... AN) Informationen über die an den jeweiligen Sensoren (S1, ... SN) liegenden Versorgungsspannungen sowie den jeweiligen Einbauort des Sensors an das Steuergerät (1) übermittelt werden.

20. Verfahren nach einem der Ansprüche 9 bis 19, dadurch gekennzeichnet, daß bei Ausfall eines oder mehrerer Sensoren (S1, ... SN) die Ausgangssignale der verbleibenden funktionsfähigen Sensoren von dem Steuergerät (1) mit einem neuen Gewichtungsfaktor bewertet werden.

21. Verfahren nach einem der Ansprüche 9 bis 20, dadurch gekennzeichnet, daß bei Zerstörung oder Unterbrechung der Leitung (2) bzw. Feststellung der Funktionsunfähigkeit aller Sensoren (S1, ... SN) das Steuergerät (1) die Ausgangssignale des zusätzlichen Sensors (S10') auswertet.

22. Verfahren nach einem der Ansprüche 9 bis 21, dadurch gekennzeichnet, daß die Ausgangssignale der Sensoren (S1, ... SN) in digitale Signale umgewandelt und als Bitfolgen auf der Leitung (2) zu dem Steuergerät (1) übertragen werden.

23. Verfahren nach einem der Ansprüche 9 bis 22, dadurch gekennzeichnet, daß als Leitung (2) eine Glasfaser verwendet wird und daß die zwischen dem Steuergerät (1) und den Sensoren (S1 bis SN) übertragenden Daten in Form von Lichtimpulsen übertragen werden.

## Claims

1. Electronic safety device for vehicle occupants, having at least one sensor (S1, ... SN) for detecting accident-specific parameters (such as, for example, the vehicle acceleration), a control unit (1) for evaluating the sensor signals and restraining means (R1, ... RN) (e.g. airbag, belt tightener), which can be activated by the control unit (1), for the vehicle occupants, characterised in that
sensors (S1, ... SN) are arranged on the vehicle (N), in that each of the N sensors (S1, ... SN) is connected to the control unit (1) via a single, serial data line (2) (serial bus), and in that each of the N sensors (S1 to SN) is assigned in each case an evaluation circuit (A1 to AN) which converts the output signal of the respective sensor (S1 to SN) into a signal sequence which can be transmitted via the data line (2).

2. Device according to Claim 1, characterised in that the evaluation circuits (A1, A2, ... AN) convert analog sensor output signals of the sensors (S1, S2, ... SN), if appropriate in conjunction with the interface circuits (I1, I2, ... IN), into digital signals.

3. Device according to one of Claims 1 to 2, characterised in that an optical waveguide is provided as data line (2, 3), and in that the interface circuits (I1 to IN) convert the electronic signals which are emitted by the sensors (S1 to SN) and, if appropriate, processed by the out of [sic] evaluation circuits (A1 to AN), into optical signals and convert the optical signals transmitted by the control unit (1) into electronic signals.

4. Device according to one of Claims 1 to 3, characterised in that the evaluation circuits (A1 to AN) generate signals which characterise the type of the sensors (S1 to SN) and their installation site in the vehicle, and transmit them to the control unit (1).

5. Device according to one of Claims 1 to 4, characterised in that the control unit (1) comprises storage means (4) for storing signals which characterise the type and the installation site of the sensors (S1 to SN) in the vehicle.

6. Device according to one of Claims 1 to 5, characterised in that at least one sensor (S10') is arranged in the control unit (1) itself or at least in its immediate vicinity.

7. Device according to one of Claims 1 to 6, characterised in that the control unit (1) has comparison means which, for the purpose of identifying the respective sensor (S1 to SN), compare the information stored in the storage means (4) relating to the type and installation site of the sensors (S1 to SN) with the data transmitted by the evaluation circuits (A1, A2, ... AN).

8. Device according to one of Claims 1 to 7, characterised in that the control unit (1) comprises means for determining an inoperative sensor (S1, ... SN), and in that, when an inoperative sensor is determined, the output signal of one or, if appropriate, more operative sensors is evaluated with a new weighting factor.

9. Operating process for an electronic device according to one of Claims 1 to 8, characterised by the following process steps :

a) the control unit (1) determines the number and type of the operative sensors (S1, ... SN) present ;

b) each detected sensor is assigned a serial number which characterises a sequence ;

c) the serial number determines the order of communication of the sensors (S1, ... SN) with the control unit (1).

10. Operating process according to Claim 9, characterised in that, after switching on the electronic device, the control unit (1) carries out a reset of the electronic device by means of an activation the ($t_R$) of the line (2) with which is long in comparison to the normal operation, and after a waiting the ($t_1$) requests all the sensors (S1 to SN) to emit a code word which is characteristic of them.

11. Process according to one of Claims 9 and 10, characterised in that after the initial successful and complete identification of a first sensor of the sensors (S1 to SN), the control unit assigns the said sensor an ordering number which characterises the highest priority level and subsequently begins a directional communication with this sensor, whilst the other sensors, still not identified, wait until this bidirectional communication is ended.

12. Process according to one of Claims 9 to 11, characterised in that after successful identification of a first sensor and a bidirectional information exchange between this sensor and the control unit (1), the control unit (1) identifies successive further sensors of the sensors (S1 to SN) and conducts with the latter a bidirectional communication until, in accordance with the order, all the sensors are occupied with an ordering number which characterises their respective priority.

13. Process according to one of Claims 9 to 12, characterised in that after being requested by the control unit (1), all the sensors (S1, ... SN) simultaneously emit a code word which is specific to them or, if appropriate, a plurality of code words in the form of a bit sequence, in that the sensors (S1, ... SN) test the status of the line (2) after each emission of a bit of the bit sequence as to whether the emitted bit coincides with the status of the line (2), and in that, when a non-coincidence is detected between the respective last emitted bit of the bit sequence and the status of the line (2), the respective sensor (S1, ... SN), ends its transmission until a renewed request from the control unit (1) occurs.

14. Process according to one of Claims 9 to 13, characterised in that after being requested by the control unit (1), each sensor (S1, ... SN) initially waits for a time ($t_{kx}$) (x = 1 to N) which is characteristic of it and does not then begin to emit its code word until this time has expired, if no code word originating from another sensor of the sensors (S1, ... SN) is detected on the line (2) which is being observed by the said sensor at the same time.

15. Process according to Claim 14, characterised in that, after transmitting a first complete code word, the sensors transmitting the code word read back the respective previously transmitted code word via the line (2), compare this read-back code word with the previously transmitted code word and, after the expiry of a second waiting time ($t_{kx'}$) (x = 1 to N), only transmit if a comparison between the transmitted code word and the code word read back via the line (2) results in identity and if, during the second waiting time, no code word of a different sensor of the sensors (S1, ... SN) is detected on the line (2).

16. Process according to one of Claims 9 to 15, characterised in that, after the switch-on phase for the data exchange between the sensors (S1, ... SN) and the control unit (S1) [sic], the control unit (S1) [sic] presets a timing marker by which each sensor (S1, ... SN) orients itself, and in that each of the sensors (S1, ... SN) does not transmit its message to the control unit (S1) until, starting from the timing marker determined by the control unit (1), a waiting time ($t_{wx}$) where (x = 1 to N) characteristic of it, has expired.

17. Process according to one of Claims 9 to 16, characterised in that, in the event of non-synchronisation of the data exchange between the control unit (1) and the sensors (S1, ... SN) by the control unit (1) during the switch-on phase, the sensor with the highest priority (ordering number 1) is specified as "master sensor", in that this master sensor (S1) transfers its message ($N_1$) after a period ($t_{w1}$) = T to the control unit (1), and in that, orienting themselves by the master sensor (S1), the other sensors (S2, ... SN) transmit their messages ($N_2$, ... $N_N$) to the control unit (S1) [sic] after the expiry of a respective specific waiting time ($t_{w2}$, ... $t_{wN}$) after the end of the transmission the of the sensor (S1).

18. Process according to one of Claims 9 to 17, characterised in that, in addition to the output signals of the sensors (S1, ... SN), if appropriate after evaluation by the evaluation circuits (A1, ... AN), additionally or alternatively in each case maximum values, mean values and integral values of the output signal of the sensors are also transmitted to the control unit (S1).

19. Process according to one of Claims 9 to 18, characterised in that at least in the switch-on phase, if appropriate also in test phases of the evaluation circuits (A1, ... AN), information relating to the supply voltages present at the respective sensors (S1, ...

SN) and to the respective installation site of the sensor is transmitted to the control unit (1).

20. Process according to one of Claims 9 to 19, characterised in that, in the event of failure of one or more sensors (S1, ... SN), the output signals of the remaining operative sensors are evaluated by the control unit (1) with a new weighting factor.

21. Process according to one of Claims 9 to 20, characterised in that, in the event of the destruction or interruption of the line (2) or the detection of the inoperativeness of all the sensors (S1, ... SN), the control unit (1) evaluates the output signals of the additional sensor (S10').

22. Process according to one of Claims 9 to 21, characterised in that the output signals of the sensors (S1, ... SN) are converted into digital signals and transmitted as bit sequences on the line (2), to the control unit (1).

23. Process according to one of Claims 9 to 22, characterised in that a glass fibre is used as line (2), and in that the data to be transmitted between the control unit (1) and the sensors (S1 to SN) are transmitted in the form of light pulses.

**Revendications**

1. Installation électronique de sécurité pour les passagers d'un véhicule, installation comprenant au moins un capteur (S1 ... SN) pour détecter les paramètres caractéristiques d'un accident (comme par exemple l'accélération du véhicule), un dispositif de commande (1) pour exploiter des signaux de capteur et des moyens de retenue (R1 ... RN) susceptibles d'être activés par le dispositif de commande (1) (par exemple une poche à air, des raidisseurs de ceintures de sécurité), pour les passagers, installation caractérisée en ce que le véhicule est équipé de N capteurs (S1 ... SN), chacun des N capteurs est relié par une seule ligne de transmission de données (2) en série (bis de type série), au dispositif de commande (1) et en ce qu'à chacun des N capteurs (S1-SN) il est associé chaque fois un circuit d'exploitation (A1 ... AN) qui transforme le signal de sortie de chaque capteur (S1 ... SN) en une suite de signaux susceptibles d'être transmis par la ligne de données (2).

2. Installation selon la revendication (1), caractérisée en ce que les signaux de sortie de capteurs de types analogiques des circuits d'exploitation (A1, A2 ... AN) des capteurs (S1, S2 ... SN), sont transformés en signaux numériques le cas échéant par des circuits de points de coupure (I1, I2 ... IN).

3. Installation selon l'une des revendications 1 et 2 caractérisée en ce que la ligne de transmission de données (2, 3), est un guide de lumière et les circuits, des points de jonction (I1 ... IN) transforment les signaux électroniques fournis par les capteurs (S1 ... SN) et qui sont le cas échéant préparés par les circuits d'exploitation (A1 ... AN), ont des signaux optiques et les signaux optiques transmis par le dispositif de commande (1) sont transformés en signaux électroniques.

4. Installation selon l'une des revendications 1 à 3 caractérisée en ce que les circuits d'exploitation (1 ... 1N) transmettent des signaux caractérisant le type des capteurs (S1 ... SN) et le remplacement dans le véhicule vers les dispositifs de commande (1).

5. Installation selon l'une des revendications 1 à 4 caractérisée en ce que le dispositif de commande (1) comporte des mémoires (4) pour l'enregistrement de signaux caractérisant le type et l'emplacement des capteurs (S1 ... SN) dans le véhicule.

6. Installation selon l'une des revendications 1 à 5 caractérisé en ce qu'au moins un capteur (S10'), est prévu dans le dispositif de commande (1) ou à son voisinage immédiat.

7. Installation selon l'une des revendications 1 à 6 caractérisée en ce que le dispositif de commande (1) comprend des moyens de comparaison qui, pour identifier le capteur respectif (S1 ... SN), comparent les informations inscrites dans les mémoires (4) concernant le type et l'emplacement des capteurs (S1 ... SN) aux données transmises par les circuits d'exploitation (A1, A2 ... AN).

8. Installation selon l'une des revendications 1 à 7 caractérisée en ce que le dispositif de commande (1) comprend des moyens pour déterminer un capteur défaillant (S1 ... SN), lorsque le capteur est détecté comme défaillant, le signal de sortie d'un, ou le cas échéant plusieurs capteurs en état de fonctionner soit exploités avec un nouveau coefficient de pondération.

9. Procédé de mise en main d'une installation électronique selon les revendications (1 à 8) caractérisé par les étapes de procédé suivantes :

a) Le dispositif de commande (1) détermine le nombre et le type de capteurs existants (S1 ... SN), en état de fonctionner.

b) A chaque capteur détecté on associe un numéro d'ordre d'une suite, de numéro d'ordre continu.

c) Le numéro continu définit l'ordre dans lequel les capteurs (S1 ... SN) communiquent avec le dispositif de commande (1).

10. Procédé de mise en oeuvre selon la revendication 9 caractérisé en ce qu'après le branchement de l'installation électronique, le dispositif de commande (1) execute une remise à l'état initial de l'installation électronique par une durée d'activation ($t/_R$) de la ligne (2), relativement longue par rapport à la durée du fonctionnement normal, et après un temps d'attente ($t_1$) il demande à tous les capteurs (S1 ... SN) de fournir leur mot caractéristique.

11. Procédé selon l'une des revendications 9 et 10 caractérisé en ce qu'après une première identification réussie et complète d'un premier capteur (S1 ...

SN), le dispositif de commande associe à ce capteur un numéro d'ordre qui caractérise le niveau de priorité le plus élevé puis, il commence avec ce capteur une communication bi-directionnelle alors que les autres capteurs non encores identifiés attendent jusqu'à la fin de cette communication bi-directionnelle.

12. Procédé selon l'une des revendications 9 à 11 caractérisé en ce qu'après une identification réussie d'un premier capteur et d'un échange bi-directionnel d'informations entre ce capteur et le dispositif de commande (1), le dispositif (1) identifie successivement d'autres capteurs (S1 ... SN) et effectue avec ceux-ci une communication bi-directionnelle jusqu'à ce que selon l'ordre, tous les capteurs comportent un numéro d'ordre caractérisant leur priorité respective.

13. Procédé selon l'une des revendications 9 à 12 caractérié en ce qu'après demande émise par le dispositif de commande (1), tous les capteurs (S1 ... S2) émettent simultanément un mot qui les caractérise ou le cas échéant plusieurs mots caractéristiques sous la forme d'une suite de bit, et après chaque émission d'un bit de la suite de bit, les capteurs (S1 ... SN) contrôlent l'état de la ligne (2) pour vérifier que le bit émis correspond à l'état de la ligne (2), et en cas de constatation d'une non coïncidence entre le bit de la suite de bit émis en dernier lieu et l'état de la ligne (2), le capteur (S1 ... SN) respectif termine son émission jusqu'à la réception d'une nouvelle demande provenant du dispositif de commande (1).

14. Procédé selon l'une des revendications 9 à 13 caractérisé en ce qu'après demande par le dispositif de commande (1), chaque capteur (S1 ... SN) attend tout d'abord pendant un temps qui le caractérise ($t_{kx}$) (x = 1 ... N) et ce n'est qu'à la fin de cette durée qu'il commence par l'émission de son mot caractéristique si sur la ligne (2) qu'il surveille simultanément, il n'a pas constaté la présence d'un mot caractéristique provenant d'un autre capteur (S1 ... SN).

15. Procédé selon la revendication 14 caractérisé en ce qu'après l'émission d'un premier mot caractéristique complet, le capteur qui émet ce mot caractéristique effectue la lecture en retour du mot caractéristique émis précédemment par la ligne (2), compare ce mot caractéristique lu au retour, avec le mot caractéristique émis précédemment et à la fin d'un second temps d'attente ($t/_{kx'}$) (x' = 1 ... N) il n'émet que six comparaisons entre le mot caractéristique émis et celui du non retour si la ligne (2) correspond à une identité et si pendant le second temps d'attente, il n'a constaté sur la ligne (2) aucun mot caractéristique provenant d'un autre capteur (S1 ... SN).

16. Procédé selon l'une des revendications (9 à 15) caractérisé en ce qu'à la suite de la phase de mise en oeuvre, le dispositif de commande (1) prédétermine un repère de temps pour l'échange de données entre les capteurs (S1 ... SN) et le dispositif de commande (S1), chaque capteur (S1 ... SN) s'alignant sur ce repère et en ce que chacun des capteurs (S1 ... SN) ne transmet son information vers le dispositif de commande (S1) qu'après un temps d'attente ($t/_{WW}$) (X = 1 ... N) qui caractérise ce capteur, temps d'attente décompté après le repère de temps fixé par le dispositif de commande.

17. Procédé selon l'une des revendications 9 à 16 caractérisé en ce qu'en cas de non synchronisation de l'échange des données entre le dispositif de commande (1) et les capteurs (S1 ... SN), le dispositif de commande (1) définit, au cours de la phase de mise en oeuvre, le capteur maître, comme étant le capteur de priorité le plus élevée (numéro d'ordre 1) et en ce qu'après un temps ($T_{W1}$) = T ce capteur maître (S1) transmet son information (N1) vers le dispositif de commande (1), et les autres capteurs (S2 ... SN) transmettent leurs informations (N2 ... NN) en fonction du capteur maître (S1), après un temps d'attente ($t_{W2}$ ... $t_{WN}$) spécifique, respectif, à la suite de la fin du temps de transmission du capteur (S1) vers le dispositif de commande (1).

18. Procédé selon l'une des revendications 9 à 17 caractérisé en ce qu'en plus des signaux de sortie des capteurs (S1 ... SN), exploités le cas échéant par les circuits d'exploitation (A1 ... AN) on transmet en plus ou en remplacement, la valeur maximale, la valeur moyenne et l'intégral du signal de sortie des capteurs vers le dispositif de commande (1).

19. Procédé selon l'une des revendications 9 à 18 caractérisé en ce qu'au moins en phase de mise en oeuvre, le cas échéant également au cours des phases de contrôle des circuits d'exploitation (A1 ... AN), on transmet les informations concernant les tensions d'alimentation appliquées aux capteurs respectifs (S1 ... SN) ainsi que concernant l'emplacement de chaque capteur vers le dispositif de commande (1).

20. Procédé selon l'une des revendications 9 à 19 caractérisé en ce qu'en cas de défaillance d'un ou plusieurs capteurs (S1 ... SN), le dispositif de commande (1) exploite avec un nouveau coefficient de pondération, les signaux de sortie des capteurs encore en état de fonctionner.

21. Procédé selon l'une des revendications 9 à 20 caractérisé en ce qu'en cas de destruction ou coupure de la ligne 2 ou de constatation de la défaillance de tous les capteurs (S1 ... SN), le dispositif de commande (1) exploite les signaux de sortie du capteur supplémentaire (S10').

22. Procédé selon l'une des revendications 9 à 21 caractérisé en ce que les signaux de sortie des capteurs (S1 ... SN) sont transformés en signaux numériques et sont transmis comme suite de bit par la ligne (2) vers le dispositif de commande (1).

23. Procédé selon l'une des revendications 9 à 22 caractérisé en ce que la ligne (2) est un guide de lumière et les données transmises entre le dispositif de commande et les capteurs (S1 ... SN) sont transmises sous la forme d'impulsions de lumière.

FIG. 1

FIG. 2

2

1

S1

S2

S3

S4

S5

$t_R$ $t_W$ $t_0$ $t$

# FIG. 3

A

300 — Start $t_0$

301 — Reset $t_R$

302 — Wartezeit $t_W$

303 — $1 \rightarrow S1 \ldots SN$

Leitung 2 > $t_z$ inaktiv
oder Wiederholung $N_N$

304 — nein

ja

305 — 1 identifiziert
S1

307 — S2 bis SN
warten

306 — 1 überprüft
S1

308 — 1 identifiziert
S2

310 — S3 bis SN
warten

309 — 1 überprüft
S2

311 — 1 identifiziert
SN

312 — 1 überprüft SN

B

15

# FIG. 4a

```
S1    0 1 0 1 0 1 0 1
S2    0 1 1 0 0 1 1 0
S3    0 1 0 1 1 0 1 0
S4    0 1 0 1 0 0 1 0
```

# FIG. 4b

FIG.5

FIG.6

FIG. 7

FIG. 8

# FIG. 9

# FIG. 10